# EUROPEAN PATENT APPLICATION

(11) **EP 4 468 420 A1**
(43) Date of publication of application: **27.11.2024**
(21) Application number: 23921610.4
(22) Date of filing: 31.03.2023
(51) Int. Cl.: H01M 4/62

(54) **SODIUM-ION POSITIVE ELECTRODE MATERIAL AND PREPARATION METHOD THEREFOR AND USE THEREOF, SODIUM-ION BATTERY, SODIUM-ION BATTERY PACK, AND DEVICE**

(30) Priority: 28.02.2023 CN 202310183846
(71) Applicant: Beijing Easpring Material Technology Co., Ltd., Beijing 100160 (CN)
(72) Inventor: SHAO, Zongpu, Beijing 100160 (CN); LIU, Yafei, Beijing 100160 (CN); YANG, Haoran, Beijing 100160 (CN); HU, Juntao, Beijing 100160 (CN); CHEN, Yanbin, Beijing 100160 (CN)
(74) Representative: Ricker, Mathias
(86) International application number: PCT/CN2023/085544
(87) International publication number: WO 2024/178777

(57) **Abstract**

The present application relates to the technical field of sodium-ion batteries. Provided are a sodium-ion cathode material, a preparation method and use thereof, a sodium-ion battery, a sodium-ion battery pack, and a device. The sodium-ion cathode material includes a matrix and a coating layer coated on the matrix. The matrix has a composition represented by formula I: Na_{1-*x*}[Ni*_{y}*Mn*_{z}*M*ᵤ*]Ti*ᵥ*O₂ formula I. The coating layer has a composition represented by formula II: Na_{2-β}Ti_{6-*α*}M'*_{α}*O₁₃ formula 11. The sodium-ion cathode material has characteristics of high ionic and electronic conductivity, strong structural stability, and strong chemical stability. At the same time, applying the composite cathode material to the sodium-ion batteries can effectively improve electrochemical performance of the battery.

## Description

### CROSS-REFERENCE TO RELATED APPLICATIONS

The present application claims priority to Chinese Patent Application No. 202310183846.2, filed on February 28, 2023, which is incorporated herein by reference in its entirety.

### FIELD

The present disclosure relates to the technical field of sodium-ion batteries, and particularly, to a sodium-ion cathode material, a preparation method and use thereof, a sodium-ion battery, a sodium-ion battery pack, and a device.

### BACKGROUND

With an explosive development of new energy vehicles and large-scale energy storage markets, sales of lithium-ion batteries have increased sharply, which poses a serious challenge to global supply of lithium resources. Compared with the lithium resources, sodium resources are widely distributed in the crustal structure, with a content up to 2.4 wt%, which is much higher than a content of the lithium resources of 0.0065 wt%. Therefore, in recent years, the sodium-ion batteries have become a key energy storage system undergoing intense development in a new energy industry.

A cathode material is a very important key material in the sodium-ion batteries, mainly including systems such as metal oxides, polyanionic compounds, Prussian blue materials, and organic materials. The cathode material of metal oxide systems has the advantages of high voltage platform, high discharge capacity, and high powder compaction, and is a type of battery material with great development potential. A charging and discharging process of metal oxide cathode materials is a deintercalation reaction. Due to a greater radius, a sodium ion has a great change of expansion and contraction in volume during the charging and discharging process, resulting in poor cycle performance and an adverse effect on safety performance of the battery.

Therefore, it is urgent to provide a new composite cathode material for the sodium-ion batteries.

### SUMMARY

An object of the present disclosure is to overcome problems existing in a cathode material of a sodium-ion battery in the related art, such as low ionic conductivity, poor structural stability, and poor chemical stability. The present disclosure provides a sodium-ion cathode material, a preparation method and use thereof, a sodium-ion battery, a sodium-ion battery pack, and a device. The sodium-ion cathode material has the characteristics such as high ionic and electronic conductivity, strong structural stability, and strong chemical stability. At the same time, by applying the composite cathode material to the sodium-ion batteries, an electrochemical performance of the batteries can be effectively improved.

To achieve the above-mentioned object, in a first aspect, the present disclosure provides a sodium-ion cathode material. The cathode material includes a matrix and a coating layer coated on the matrix. The matrix has a composition represented by formula I: Na_{1-*x*}[Ni*_{y}*Mn*_{z}*M*ᵤ*]Ti*ᵥ*O₂ (formula I), where -0.4<x<0.4, 0.2<y<0.6, 0.1≤*z*≤0.5, 0.1≤*u*≤0.5, 0≤*v*≤0.02, *y*+*z*+*u*+*v*=1; and M is selected from at least one of Fe, Mg, Al, Cu, Zn, Zr, Nb, Co, Y, V, Sc, Cr, W, La, Mo, Os, Pr, Re, Ru, Sr, Sm, and Ta. The coating layer has a composition represented by formula II: Na_{2-β}Ti_{6-*α*}M'*_{α}*O₁₃ (formula II), where 0≤*α*≤0.6, -2≤*β*<1; and M' is selected from at least one of Li, Mg, Fe, Al, Ga, In, Ge, Y, Sc, and Zr.

In a second aspect, the present disclosure provides a preparation method of a sodium-ion cathode material. The preparation method includes: (1) performing a first mixing on a first sodium source, an optional M' source, a titanium source with a solvent to obtain a first slurry; sequentially performing a first drying and a first sintering on the first slurry to obtain a first sintered product; and sequentially crushing and drying the first sintered product to obtain a coating layer; wherein the coating layer has a composition represented by formula II: Na_{2-*β*}Ti_{6-*α*}M'*_{α}*O₁₃ (formula II), where 0≤*α*≤0.6, -2≤*β*<1; and M' is selected from at least one of Li, Mg, Fe, Al, Ga, In, Ge, Y, Sc, and Zr; (2) performing a second mixing on a second sodium source, a nickel source, a manganese source, an M source, and an optional titanium source, and sequentially performing a second drying and a second sintering on the obtained second mixture to obtain a matrix; wherein the matrix has a composition represented by formula I: Na_{1-*x*}[Ni*_{y}*Mn*_{z}*M*ᵤ*]Ti*ᵥ*O₂ (formula I), where -0.4<x<0.4, 0.2<y<0.6, 0.1<z<0.5, 0.1≤*u*≤0.5, 0≤*v*≤0.02, *y*+*z*+*u*+*v*=1; and M is selected from at least one of Fe, Mg, Al, Cu, Zn, Zr, Nb, Co, Y, V, Sc, Cr, W, La, Mo, Os, Pr, Re, Ru, Sr, Sm, and Ta; and (3) performing a third mixing on the coating layer and the matrix, and performing a heat treatment on the obtained third mixture to obtain the sodium-ion cathode material. The first sintering is performed in a non-oxidizing gas.

In a third aspect, the present disclosure provides a sodium-ion cathode material prepared by the method according to the second aspect.

In a fourth aspect, the present disclosure provides use of the sodium-ion cathode material according to the first aspect or the third aspect in a sodium-ion battery.

In a fifth aspect, the present disclosure provides a sodium-ion battery. The sodium-ion battery includes a positive electrode pole piece prepared by the sodium-ion cathode material according to the first aspect or the third aspect.

In a sixth aspect, the present disclosure provides a sodium-ion battery pack. The sodium-ion battery pack includes the sodium-ion battery according to the fifth aspect.

In a seventh aspect, the present disclosure provides a device. The device includes the sodium-ion battery pack according to the sixth aspect.

Based on the above-mentioned technical solutions, the sodium-ion cathode material, the preparation method and use thereof, the sodium-ion battery, the sodium-ion battery pack, and the device according to the present disclosure have the following beneficial effects.
(1) The sodium-ion cathode material provided by the present disclosure can effectively improve the ionic and electronic conductivity and the surface activity of the coating layer by coating with Na_{2-β}Ti_{6-*α*}M'*_{α}*O₁₃ At the same time, by coating the coating layer on a specific matrix, the structural and chemical stability of the composite cathode material can be significantly improved.
(2) In the sodium-ion cathode material according to the present disclosure, the coating layer is a pure phase of a coating material, which can not only ensure a high ionic conductivity of the coating layer phase has, but also improve the electronic conductivity of the coating layer by element doping. Therefore, it is prevented that the introduced coating layer blocks the electronic and ion channels of the matrix. Preferably, in the sodium-ion cathode material, element Ti in the matrix is distributed in a gradient. Further, element Ti in the matrix can easily form a Na-Ti-O chemical bond with the Na₂Ti₆O₁₃ phase contained in the coating layer, thereby further reducing the interface impedance under the premise of achieving a tight coating of the coating layer.
(3) In the preparation method of the composite cathode material according to the present disclosure, the coating layer is subjected to a heat treatment in a non-oxidizing gas, to be more closely bond the coating layer with the matrix, thereby improving the electrochemical performance of the sodium-ion battery prepared by the sodium-ion cathode material. At the same time, the method simplifies process flow and facilitates industrial production.
(4) By applying the sodium-ion cathode material according to the present disclosure in the sodium-ion batteries, the cycle life, rate performance, and safety performance of the batteries can be effectively improved.

### BRIEF DESCRIPTION OF THE DRAWINGS

FIG. 1 is a cross-sectional EDS line scan image of a sodium-ion cathode material prepared in Example 1;
FIG. 2 is an XRD diffraction pattern of a sample of a coating layer C1 prepared in Example 1;
FIG. 3 is an XRD diffraction pattern of a sodium-ion cathode material prepared in Comparative Example 1;
FIG. 4 is an XRD diffraction pattern of a sodium-ion cathode material prepared in Example 10; and
FIG. 5 is a DSC spectrum of sodium-ion cathode materials prepared in Example 1 and Comparative Example 1.

### DETAILED DESCRIPTION

The endpoints and any value of the ranges disclosed herein shall not limited to the exact range or value, and those ranges or values should be understood to include values close to those ranges or values. For numerical ranges, endpoints of each range, an endpoint of each range and an individual point value, and individual point values may be combined with each other to obtain one or more new numerical ranges, which should be deemed to be specifically disclosed herein.

In the present disclosure, unless otherwise specified, the term "first", "second", and "third", instead of indicating a sequence of precedence or a limitation on each material or step, are only used to distinguish that these materials or steps are not the same material or step. For example, the term "first" and "second" in "first sodium source" and "second sodium source" are only used to distinguish that the sodium sources are not the same sodium source; and the term "first", "second", and "third" in "first mixing", "second mixing", and "third mixing" are only used to distinguish that said mixings are not the same mixing.

In a first aspect, the present disclosure provides a sodium-ion cathode material. The cathode material includes a matrix and a coating layer coated on the matrix. The matrix has a composition represented by formula I: Na_{1-*x*}[Ni*_{y}*Mn*_{z}*M*ᵤ*]Ti*ᵥ*O₂ (formula I), where -0.4<x<0.4, 0.2<y<0.6, 0.1≤*z*≤0.5, 0.1≤*u*≤0.5, 0≤*v*≤0.02, *y+z+u+v=1;* and M is selected from at least one of Fe, Mg, Al, Cu, Zn, Zr, Nb, Co, Y, V, Sc, Cr, W, La, Mo, Os, Pr, Re, Ru, Sr, Sm, and Ta. The coating layer has a composition represented by formula II: Na_{2-β}Ti_{6-*α*}M'*_{α}*O₁₃ (formula II), where 0≤*α*≤0.6, -2≤*β*<1; and M' is selected from at least one of Li, Mg, Fe, Al, Ga, In, Ge, Y, Sc, and Zr.

In the present disclosure, the sodium-ion cathode material includes a coating layer Na_{2-β}Ti_{6-*α*}M'*_{α}*O₁₃ having a specific composition. The coating layer and the matrix both partially contain the same Na₂Ti₆O₁₃ phase, and the Na₂Ti₆O₁₃ phase in the coating layer has the same crystal structure as the Na₂Ti₆O₁₃ phase in the matrix. The Na-Ti-O chemical bonds existing in both the coating layer and the matrix may be organically bonded to achieve an object of tight coating. In this way, the sodium-ion cathode material including the matrix and the Na_{2-β}Ti_{6-*α*}M'*_{α}*O₁₃ coating layer coated on the matrix can have a high ionic and electronic conductivity, and excellent structural and chemical stability.

In a specific embodiment of the present disclosure, in formula I, -0.2<x<0.4, 0.2<y<0.5, 0.2<z<0.5, 0.2<u<0.5, 0.01≤*v*≤0.02, *y*+*z*+*u*+*v*=1; and M is selected from at least one of Fe, Cu, Nb, Co, V, and Cr.

In a preferred embodiment of the present disclosure, in formula I, 0≤*x*≤0.35, 0.3<y<0.4, 0.2<z<0.4, 0.2<u<0.4, 0.01≤*v*≤0.02, *y*+*z*+*u*+*v*=1; and M is selected from at least one of Fe, Cu, Nb, Co, and V

In a specific embodiment of the present disclosure, in formula II, 0<a<0.5, -2≤*β*<1; and M' is selected from at least one of Mg, Fe, Al, Y, and Zr.

In a preferred embodiment of the present disclosure, in formula II, 0.01≤*α*<0.3, - 2≤*β*<0.5; and M' is selected from at least one of Fe, Mg, and Al.

In the present disclosure, in formula II, a value of β depends on a change in valence state of respective ions in formula II to ensure charge balance of the coating layer material.

According to the present disclosure, in a direction from a center of the matrix to a surface of the matrix, element Ti is distributed in a gradient, and preferably, in an increasing gradient.

In the present disclosure, element Ti is controlled to be distributed in a gradient, and preferably in an increasing gradient, along the direction from the center of the matrix to the surface of the matrix, to be distributed in an increasing gradient. That is, a content of element Ti on the surface of the matrix is relatively high. In this way, it can be ensured that element Ti in the matrix can easily form a chemical bond Na-Ti-O with the Na₂Ti₆O₁₃ phase contained in the coating layer, thereby further reducing the interface impedance under the premise of achieving tight coating of the coating layer.

Further, in the direction from the center of the matrix to the surface of the matrix, element Ti is increased with a rate ranging from 0.001 mol%/µm to 0.3 mol%/µm, preferably, from 0.001 mol%/µm to 0.2 mol%/µm, and more preferably, from 0.001 mol%/µm to 0.1 mol%/µm.

In some embodiments of the present disclosure, preferably, a weight ratio of the matrix to the coating layer is 100: (0.01 to 5), for example, 100: 0.01, 100: 0.05, 100: 0.1, 100: 0.5, 100: 1, 100: 3, 100: 5, or any value in a range consisting of any two of the above-mentioned values, and preferably, 100: (0.05 to 3). With the preferred weight ratio, the coating layer can form a uniform coating on the matrix with a relatively high coating density, which can effectively inhibit side reactions between the matrix and the electrolyte. At the same time, the coating layer is not too thick to affect exertion of the capacity and rate performance of the cathode material.

In some embodiments of the present disclosure, preferably, the coating layer has a thickness ranging from 10 nm to 200 nm, preferably, from 10 nm to 100 nm, and more preferably, from 50 nm to 100 nm.

In some embodiments of the present disclosure, preferably, the sodium-ion cathode material has an average particle size D₅₀ ranging from 2 µm to 30 µm, and preferably, from 4 µm to 12 µm.

In the present disclosure, unless otherwise specified, parameters of the average particle diameter D₅₀ are measured by a laser particle size analyzer; and parameters of the thickness are measured by a transmission electron microscope.

In some embodiments of the present disclosure, preferably, the sodium-ion cathode material has an ionic conductivity ranging from 10⁻⁴ S/cm to 10⁻³ S/cm, and preferably, from 5×10⁻⁴ S/cm to 10⁻³ S/cm.

In some embodiments of the present disclosure, preferably, the sodium-ion cathode material has an ionic conductivity ranging from 10⁻⁷ S/cm to 10⁻⁶ S/cm, and preferably, from 5×10⁻⁷ S/cm to 10⁻⁶ S/cm.

In the present disclosure, unless otherwise specified, the ionic conductivity of the sodium-ion cathode material is measured using an electrochemical workstation, and the electronic conductivity of the sodium-ion cathode material is measured using a powder resistance tester.

In the present disclosure, the coating layer of the sodium-ion cathode material is subjected to a heat treatment in a non-oxidizing gas, allowing the coating layer and the matrix to be more closely bonded, thereby improving the electrochemical performance of the sodium-ion battery prepared by the sodium-ion cathode material.

In a second aspect, the present disclosure provides a preparation method of a sodium-ion cathode material. The preparation method includes: (1) performing a first mixing on a first sodium source, an optional M' source, a titanium source with a solvent to obtain a first slurry; sequentially performing a first drying and a first sintering on the first slurry to obtain a first sintered product; and sequentially crushing and drying the first sintered product to obtain a coating layer, wherein the coating layer has a composition represented by formula II: Na_{2-*β*}Ti_{6-*α*}M'*_{α}*O₁₃ (formula II), where 0≤*α*≤0.6, -2≤*β*<1; and M' is selected from at least one of Li, Mg, Fe, Al, Ga, In, Ge, Y, Sc, and Zr; (2) performing a second mixing on a second sodium source, a nickel source, a manganese source, an M source, and an optional titanium source, and sequentially performing a second drying and a second sintering on the obtained second mixture to obtain a matrix, wherein the matrix has a composition represented by formula I: Na_{1-*x*}[Ni*_{y}*Mn*_{z}*M*ᵤ*]Ti*ᵥ*O₂ (formula I), where -0.4<x<0.4, 0.2<y<0.6, 0.1≤*z*≤0.5, 0.1≤*u*≤0.5, 0≤*v*≤0.02, *y*+*z*+*u*+*v*=1; and M is selected from at least one of Fe, Mg, Al, Cu, Zn, Zr, Nb, Co, Y, V, Sc, Cr, W, La, Mo, Os, Pr, Re, Ru, Sr, Sm, and Ta; and (3) performing a third mixing on the coating layer and the matrix, and performing a heat treatment on the obtained third mixture to obtain the sodium-ion cathode material. The first sintering is performed in a non-oxidizing gas.

In the present disclosure, by adopting the preparation method according to the second aspect of the present disclosure, the coating layer having a specific composition and the matrix having a specific composition are mixed and then subjected to a heat treatment to obtain the sodium-ion cathode material according to the first aspect of the present disclosure. In the sodium-ion cathode material, the coating layer Na_{2-β}Ti_{6-*α*}M'*_{α}*O₁₃ having a specific composition and the matrix both partially contain the same Na₂Ti₆O₁₃ phase, and the Na₂Ti₆O₁₃ phase in the coating layer has the same crystal structure as the Na₂Ti₆O₁₃ phase in the matrix. The Na-Ti-O chemical bonds existing in both the coating layer and the matrix may be organically bonded to achieve an object of tight coating. In this way, the sodium-ion cathode material including the matrix and the Na_{2-β}Ti_{6-*α*}M'*_{α}*O₁₃ coating layer coated on the matrix can have a high ionic and electronic conductivity, and excellent structural and chemical stability.

According to the present disclosure, the content of the residual alkali on a surface of the matrix is ≤2 wt%.

In the present disclosure, since the residual alkali on the surface is an inert layer, an excessively high content of residual alkali may form a thick inert layer between the coating layer and the matrix, thereby affecting the chemical bonding between the matrix and the coating layer. In order to achieve a tight bonding between the coating layer and the matrix, it is required to control the content of the residual alkali on the surface of the matrix to be no more than 2 wt%. Preferably, the content of the residual alkali on the surface of the matrix is controlled in the range from 0.1 wt% to 1 wt%.

Further, in the present disclosure, the first sintering is performed in a non-oxidizing gas to prepare the coating layer, to reduce a content of Ti⁴⁺ in the coating layer Na_{2-β}Ti_{6-*α*}M'*_{α}*O₁₃ and increase a certain amount of oxygen vacancies, thereby allowing the coating layer material to have a certain degree of activity. The coating layer, in the process of coating the matrix, can be more prone to bond with oxygen dangling bonds on the surface of the matrix, thereby improving the tight bonding between the coating layer and the matrix, and improving the structural stability and cycle performance of the sodium-ion cathode material.

In the present disclosure, unless otherwise specified, the respective materials are fed in the amount that they can all be used to generate products. That is, the feed amounts of the first sodium source, M' source, and titanium source satisfy the composition of formula II; and the feed amounts of the second sodium source, the nickel source, the manganese source, and the M source satisfy the composition of formula I.

In the present disclosure, the non-oxidizing gas refers to a gas that does not contain oxygen. Preferably, the non-oxidizing gas includes, but is not limited to, nitrogen, helium, argon, neon, etc.

In the present disclosure, a manner of the first mixing in step (1) can be selected from a relatively broad range, as long as the first sodium source, the M' source, the titanium source, and the solvent can be mixed uniformly.

In the present disclosure, in step (1), the first sodium source, the M' source, and the titanium source can be selected from various types, as long as the first sodium source, the M' source, and the titanium source contain Na, M', and Ti, respectively. M' is selected from at least one of Li, Mg, Fe, Al, Ga, In, Ge, Y, Sc, and Zr, and preferably, M' is selected from at least one of Mg, Fe, Al, Y, and Zr. Preferably, the first sodium source, the M' source, and the titanium source are each independently selected from at least one of oxides, hydroxides, nitrates, carbonates, and organic compounds containing Na, M', and Ti.

In some embodiments of the present disclosure, preferably, in step (1), the feeding amounts of the first sodium source, the M' source, and the titanium source satisfy: n(Na): n(Ti): n(M')=(2-β): (6-α): a, where 0≤α<0.6, -2≤β<1.

In some preferred embodiments of the present disclosure, preferably, in step (1), 0≤α<0.6, -2≤β<1, wherein 0<α<0.5, -2≤β<1, and more preferably, 0.01≤α<0.3, -2≤β<0.5.

In the present disclosure, the first drying is intended to remove the solvent in the first slurry. Preferably, the equipment for the first drying includes, but is not limited to, a spray dryer, a blast oven, a vacuum oven, a freeze dryer, etc. In the present disclosure, the conditions for the first drying are not specifically limited, as long as the solvent in the first slurry can be removed.

In some embodiments of the present disclosure, preferably, the first slurry has a solid content ranging from 30 wt% to 55 wt%. In the present disclosure, when the solid content of the first slurry is controlled to satisfy the above range, the respective materials in the slurry have good dispersibility, and adverse effects on the matrix structure are avoided due to the presence of excessive solvent. For example, the excessive solvent may cause an escape of sodium ions in the matrix from the phase.

In the present disclosure, a type of solvent can be selected from a relatively broad range, as long as the first sodium source, the M' source, and the titanium source can be dissolved by the solvent. Preferably, the solvent includes, but is not limited to, common solvents such as water, ethanol, ethylene glycol, glycerol, etc.

In the present disclosure, the amount of the solvent used can be in a relatively broad range, as long as the solid content of the first slurry ranges from 30 wt% to 55 wt%.

In some embodiments of the present disclosure, preferably, in step (1), conditions of the first sintering include: a temperature ranging from 500°C to 1,200°C, and preferably, from 700°C to 850°C; and a duration ranging from 4 hours to 10 hours, and preferably, from 6 hours to 8 hours.

In the present disclosure, when the conditions of the first sintering are controlled to satisfy the above-mentioned ranges, a pure-phase coating layer can be obtained, such that the prepared coating layer can have excellent crystallinity and structural stability. When the coating layer is used to coat the matrix, a dense and uniform coating layer can be formed on the surface of the matrix, thereby significantly improving the charge and discharge capacity and cycle performance of the sodium-ion cathode material. Specifically, if the sintering temperature is excessively low or the sintering duration is excessively short, a heterogeneous phase may appear in the prepared coating layer. If the sintering temperature is excessively high or the sintering duration is excessively long, the prepared coating layer may have great hardness and thus it may be difficult to be crushed.

In some embodiments of the present disclosure, preferably, in step (1), said crushing includes: crushing the first sintered product and the solvent at a weight ratio of 100: (50 to 100).

In the present disclosure, by crushing the first sintered product according to the above-mentioned method, a crushing efficiency is high, and meanwhile, the obtained coating layer can have excellent structural stability and dispersibility.

In the present disclosure, the type of solvent during ball milling is not specifically limited herein, as long as the first sintered product can be uniformly dispersed.

In the present disclosure, equipment for the crushing includes, but is not limited to, a jaw crusher, a roller mill, a ball mill, a jet mill, a mechanical mill, a sand mill, a colloid mill, etc.

In some embodiments of the present disclosure, preferably, said crushing allows the average particle size D₅₀ of the coating layer in the range from 10 nm to 200 nm, preferably, from 10 nm to 100 nm, and more preferably, from 50 nm to 100 nm.

In some embodiments of the present disclosure, preferably, conditions of said drying include: a temperature ranging from 60°C to 120°C and a duration ranging from 0.5 hours to 5 hours.

In some embodiments of the present disclosure, preferably, the dried product is crushed.

In the present disclosure, a manner of a second mixing in step (2) can be selected from a relatively broad range, as long as the second sodium source, the nickel source, the manganese source, and the M source can be mixed uniformly.

In the present disclosure, the second sodium source, the nickel source, the manganese source, and the M source can be selected from various types, as long as the second sodium source, the nickel source, the manganese source, and the M source contain Na, Ti, Mn, and M, respectively. M is selected from at least one of Fe, Mg, Al, Cu, Zn, Zr, Nb, Co, Ti, Y, V, Sc, Cr, W, La, Mo, Os, Pr, Re, Ru, Sr, Sm and Ta, and preferably, M is selected from at least one of Fe, Cu, Nb, Co, V and Cr. Preferably, in step (2), the second sodium source, the nickel source, the manganese source, and the M source are each independently selected from at least one of oxides, hydroxides, carbonates, nitrates, and organic compounds containing Na, Ni, Mn, and M.

In the present disclosure, the second drying is intended to remove moisture from the second mixture. Equipment for the drying includes, but is not limited to, a spray dryer, a blast oven, a vacuum oven, a freeze dryer, etc.

In some embodiments of the present disclosure, preferably, feeding amounts of the second sodium source, the nickel source, the manganese source, the M source, and the optional titanium source satisfy: n(Na): n(Ni): n(Mn): n(M): n(Ti)= 1-*x*): *y: z: u:* v, where -0.4<x<0.4, 0.2≤*y*≤0.6, 0.1≤*z*≤0.5, 0.1≤*u*≤0.5, 0≤*v*≤0.02, and *y*+*z*+*u*+*v*=1.

In some preferred embodiments of the present disclosure, preferably, feeding amounts of the second sodium source, the nickel source, the manganese source, the M source, and the optional titanium source satisfy: n(Na): n(Ni): n(Mn): n(M): n(Ti)=(1-*x*): *y: z: u: v,* where -0.2<x<0.4, 0.2<y<0.5, 0.2<z<0.5, 0.2<u<0.5, 0.01≤*v*≤0.02, *y+z+u+v=1.* More preferably, 0<x<0.35, 0.3<y<0.4, 0.2<z<0.4, 0.2<u<0.4, 0.01<*v*≤0.02, *y*+*z*+*u*+*v*=1_{∘}

In some embodiments of the present disclosure, preferably, the second mixing includes: performing coprecipitation on the nickel source, the manganese source, and the M source to obtain a precursor Ni*_{y}*Mn*_{z}*M*ᵤ*(OH)₂; performing a mixing I on the precursor Ni*_{y}*Mn*_{z}*M*ᵤ*(OH)₂ with the titanium source; and then performing a mixing II on a mixture of the precursor Ni*_{y}*Mn*_{z}*M*ᵤ*(OH)₂ and the titanium source with the second sodium source, to obtain a second mixture.

In the present disclosure, the second mixing is performed according to the above steps, that is, performing a mixing on the precursor with the titanium source, and then performing a mixing on a mixture of the precursor and the titanium source with the second sodium source, and performing the second sintering is performed. The duration of the second sintering is controlled. In this way, element Ti can be distributed in a gradient in the matrix. In particular, in a direction from the center of the matrix to the surface of the matrix, element Ti is distributed in an increasing gradient.

In the present disclosure, conditions of the coprecipitation are not specifically limited herein. The coprecipitation of the nickel source, the manganese source, and the M source can be performed under conventional conditions in the art.

In the present disclosure, conditions of the mixing I and mixing II are not specifically limited herein, as long as the precursor and the titanium source as well as the mixture of the precursor and the titanium source and the second sodium source can be fully and uniformly mixed.

In some embodiments of the present disclosure, preferably, conditions of the second sintering include: a temperature ranging from 600°C to 1,200°C, and preferably, from 750°C to 1,200°C; and a duration ranging from 6 hours to 10 hours, and preferably, from 8 hours to 10 hours.

In the present disclosure, when the conditions of the second sintering are controlled to satisfy the above-mentioned ranges, it can be ensured that the prepared matrix has excellent crystallinity and structural stability, thereby significantly improving the charge and discharge capacity and cycle performance of the sodium-ion cathode material containing the matrix material. Specifically, if the sintering temperature is excessively low or the sintering duration is excessively short, a heterogeneous phase may appear in the matrix due to an incomplete reaction of the materials in the matrix. If the sintering temperature is excessively high or the sintering duration is excessively long, the sodium-ions in the matrix may volatilize, thereby affecting the electrochemical performance of the battery containing the prepared sodium-ion cathode material. In the present disclosure, a manner of the third mixing method in step (3) can be selected from a relatively broad range, as long as the coating layer and the matrix can be mixed uniformly.

In some embodiments of the present disclosure, preferably, in step (3), the heat treatment is performed in a non-oxidizing gas. In the present disclosure, by controlling the heat treatment to be performed in a non-oxidizing gas, the coating layer material can be bonded with the oxygen dangling bonds on the surface of the matrix material. In this way, the coating layer and the matrix can be more tightly bonded, thereby further improving the cycle performance of the sodium-ion battery containing the sodium-ion cathode material.

In some embodiments of the present disclosure, preferably, in step (3), conditions of the heat treatment include: a temperature ranging from 200°C to 600°C, and preferably, from 400°C to 600°C; and a duration ranging from 4 hours to 8 hours, and preferably, from 6 hours to 8 hours.

In the present disclosure, when the conditions of the heat treatment are controlled to satisfy the above ranges, it can be ensured that the matrix and the coating layer fully react, and thus they can be tightly bonded, thereby improving the cycle performance of the sodium-ion battery containing the sodium-ion cathode material.

In some embodiments of the present disclosure, preferably, the third mixing includes: directly performing the third mixing on the coating layer with the matrix; or mixing the coating layer with the solvent and performing ball milling on the mixture to obtain a second slurry, and performing the third mixing on the second slurry with the matrix.

In the present disclosure, the conditions for ball milling are not specifically limited herein, as long as the coating layer and the solvent can be fully and uniformly mixed.

In the present disclosure, the amount of solvent used during ball milling is not specifically limited herein, as long as it can ensure that the solid content of the obtained second slurry subsequent to the ball milling ranges from 30 wt% to 55 wt%. In the present disclosure, the type of the solvent during ball milling is not specifically limited herein, as long as the coating layer can be uniformly dispersed.

In some embodiments of the present disclosure, preferably, a weight ratio of the coating layer to the matrix is (0.01 to 5): 100, for example, 0.01: 100, 0.05: 100, 0.1: 100, 1: 100, 3: 100, 5: 100, and any value in the range consisting of any two of the above-mentioned values, and preferably, (0.05 to 3): 100. At the preferred weight ratio, the coating layer can form a uniform coating on the matrix with a relatively high coating density, which can effectively inhibit side reactions between the matrix and the electrolyte. At the same time, the coating layer is not too thick to affect exertion of the capacity and rate performance of the cathode material. When the weight ratio is less than 0.01: 100, the matrix cannot be completely coated by the coating layer, and side reactions with the electrolyte may still occur at the exposed parts without coating, causing a rapid deterioration in the cycle performance. When the weight ratio is greater than 5: 100, the thickness of the coating layer on the surface of the matrix may be excessively great and thus the transmission path of the lithium ions is prolonged, thereby affect the exertion of the capacity and rate performance.

In third aspect, the present disclosure provides a sodium-ion cathode material prepared by the preparation method according to the second aspect.

In a fourth aspect, the present disclosure provides use of the sodium-ion cathode material according to the first aspect or the third aspect in a sodium-ion battery.

In a fifth aspect, the present disclosure provides a sodium-ion battery. The sodium-ion battery includes a positive electrode pole piece prepared by the sodium-ion cathode material according to the first aspect or the third aspect.

In some embodiments of the present disclosure, preferably, subsequent to 80 cycles at 25°C, the sodium-ion battery has a cycle retention rate of ≥75%, and preferably, from 90% to 100%

In some embodiments of the present disclosure, preferably, in a 4.2V charging state, the positive electrode pole piece has a DSC exothermic temperature of >280°C, and preferably, from 290°C to 350°C.

In a sixth aspect, the present disclosure provides a sodium-ion battery pack. The sodium-ion battery pack includes the sodium-ion battery according to the fifth aspect.

In a seventh aspect, the present disclosure provides a device including the sodium-ion battery pack according to the sixth aspect.

The present disclosure is described in detail below through examples.

The ionic conductivity was measured using an electrochemical workstation.

The concentration gradient of element Ti was measured using scanning electron microscopy (EDS).

The electronic conductivity was measured using a powder resistance tester through a four-probe method.

The content of residual alkali was measured using a potentiometric titrator through a national standard method.

The physical phases of the cathode material and the coating layer were measured using an XRD diffractometer based on a national standard method.

The raw materials used in the examples and comparative examples were all commercially available products.

### Preparation Example - Preparation of precursor Ni_{y}Mn_{z}Mᵤ(OH)₂

Nickel sulfate, manganese sulfate, and ferrous sulfate were mixed according to a feeding amount of n(Ni): n(Mn): n(Fe)=0.33: 0.33: 0.33. The mixture was coprecipitated with ammonia water and sodium hydroxide at 55°C for 46 hours. Subsequent to washing and drying, a precursor Ni_{0.33}Fe_{0.33}Mn_{0.33}(OH)₂ was obtained.

### Example 1

(1) Na₂CO₃, TiO₂, Fe₂O₃, and water were mixed to obtain a slurry having a solid content of 50 wt%. The feeding amount of Na₂CO₃, TiO₂, and Fe₂O₃ satisfied: n(Na): n(Ti): n(Fe)=2: 5.9: 0.1. The obtained slurry was treated in a spray dryer to obtain a dry powder, with a drying temperature of 110°C, and drying duration was 0.5 h. The powder was sintered at 800°C for 6 hours under a nitrogen atmosphere to obtain a first sintered material. The first sintered material was mixed with pure water (a weight ratio of 100: 100) and then subjected to sanding in a sand mill for 4 hours to obtain a slurry having an average particle size D₅₀ of 50 nm. The slurry was dried in a vacuum oven at 80°C for 2 hours to obtain powder. The powder was crushed by a jet mill to obtain a coating layer C1. The coating layer C1 had a chemical composition of Na₂Ti_{5.9}Fe_{0.1}O₁₃ and an average particle size D₅₀ of 100 nm.
(2) The feeding amount of Na₂CO₃, Ni_{0.33}Fe_{0.33}Mn_{0.33}(OH)₂, and TiO₂ satisfied: n(Na): [n(Ni)+n(Mn)+n(M)]: n(Ti)=1.03: 0.99: 0.01. In a mixing tank, at a rotate speed of 850 rpm, a mixture of Ni_{0.33}Fe_{0.33}Mn_{0.33}(OH)₂ and TiO₂ was subjected to dry ball milling and mixed for 4 hours first, and then Na₂CO₃ and the mixture of Ni_{0.33}Fe_{0.33}Mn_{0.33}(OH)₂ and TiO₂ were subjected to dry ball milling and mixing for 4 hours. The obtained second mixture was sintered in a muffle furnace at 950°C for 8 hours to obtain a matrix B1. The matrix B1 has a chemical composition of Na_{1.03}Ni_{0.33}Fe_{0.33}Mn_{0.33}Ti_{0.01}O₂.
(3) The coating layer C1 and the matrix B1 were mixed according to a weight ratio of 1: 100 in a high-speed mixer at a rotation speed of 1,000 rpm for 20 minutes to obtain a third mixture. The third mixture was subjected to a heat treatment in a muffle furnace at 300°C for 4 hours under a nitrogen atmosphere to obtain a sodium-ion cathode material S1. The sodium-ion cathode material S1 was Na_{1.03}Ni_{0.33}Fe_{0.33}Mn_{0.33}Ti_{0.01}O₂ coated with Na₂Ti_{5.9}Fe_{0.1}O₁₃.

### Example 2

The sodium-ion cathode material was prepared based on the method in Example 1. Specifically:
(1) Same as step (1) in Example 1, a coating layer C2 was prepared. The coating layer C2 had a chemical composition of Na₂Ti_{5.9}Fe_{0.1}O₁₃ and an average particle size D₅₀ of 100 nm.
(2) Na₂CO₃ and Ni_{0.33}Fe_{0.33}Mn_{0.33}(OH)₂ satisfied a feeding amount of n(Na): [n(Ni)+n(Mn)+n(M)]=1.03: 1, and were subjected to a dry ball milling and mixing at 850 rpm in a mixing tank for 4 hours. The obtained second mixture was sintered at 950°C in a muffle furnace for 8 hours to obtain a matrix B2. The matrix B2 has a chemical composition of Na_{1.03}Ni_{1/3}Fe_{1/3}Mn_{1/3}O₂.
(3) The coating layer C2 and the matrix B2 were mixed according to a weight ratio of 1: 100 in a high-speed mixer at a rotation speed of 1,000 rpm for 20 minutes to obtain a third mixture. The above mixture was subjected to a heat treatment in a muffle furnace at 300°C for 4 hours under a nitrogen atmosphere to obtain a sodium-ion cathode material S2. The sodium-ion cathode material S2 was Na_{1.03}Ni_{1/3}Fe_{1/3}Mn_{1/3}O₂ coated with Na₂Ti_{5.9}Fe_{0.1}O₁₃.

### Example 3

(1) Na₂CO₃, TiO₂, and water were mixed to obtain a slurry having a solid content of 50 wt%. The feeding amount of Na₂CO₃ and TiO₂ satisfied: n(Na): n(Ti) =2: 6. The obtained slurry was treated in a spray dryer to obtain a dry powder with a drying temperature of 110°C, and drying duration was 0.5 h. The powder was sintered at 800°C for 6 hours under a nitrogen atmosphere to obtain a first sintered material. The first sintered material was mixed with pure water (at a weight ratio of 100: 100) and then subjected to sanding in a sand mill for 4 hours to obtain a slurry having an average particle size D₅₀ of 50 nm. The slurry was dried in a vacuum oven at 80°C for 2 hours to obtain powder. The powder was crushed by a jet mill to obtain a coating layer C3. The coating layer C3 had a chemical composition of Na₂Ti₆O₁₃ and an average particle size D₅₀ of 100 nm.
(2) Same as step (2) in Example 1, a matrix B3 was prepared. The matrix B3 had a chemical composition of Na_{1.03}Ni_{0.33}Fe_{0.33}Mn_{0.33}Ti_{0.01}O₂.
(3) The coating layer C3 and the matrix B3 were mixed according to a weight ratio of 1: 100 in a high-speed mixer at a rotation speed of 1,000 rpm for 20 minutes to obtain a third mixture. The above mixture was subjected to a heat treatment in a muffle furnace at 300°C for 4 hours under a nitrogen atmosphere to obtain a sodium-ion cathode material S3. The sodium-ion cathode material S3 was Na_{1.03}Ni_{0.33}Fe_{0.33}Mn_{0.33}Ti_{0.01}O₂ coated with Na₂Ti₆O₁₃.

### Example 4

The sodium-ion cathode material was prepared based on the method in Example 1. Specifically:
(1) Same as step (1) in Example 1, a coating layer C4 was prepared.
(2) The feeding amount of Na₂CO₃, Ni_{0.33}Fe_{0.33}Mn_{0.33}(OH)₂, and TiO₂ satisfied: n(Na): [n(Ni)+n(Mn)+n(M)]: n(Ti)=1.03: 0.99: 0.01. In a mixing tank at 850 rpm, a mixture of Ni_{0.33}Fe_{0.33}Mn_{0.33}(OH)₂ and TiO₂ was subjected to dry ball milling and mixing for 4 hours, and then Na₂CO₃ and the mixture of Ni_{0.33}Fe_{0.33}Mn_{0.33}(OH)₂ and TiO₂ were subjected to dry ball milling and mixing for 4 hours. The obtained second mixture was sintered in a muffle furnace at 950°C for 10 hours to obtain a matrix B4. The matrix B4 has a chemical composition of Na_{1.03}Ni_{0.33}Fe_{0.33}Mn_{0.33}Ti_{0.01}O₂.
(3) The coating layer C4 and the matrix B4 were mixed according to a weight ratio of 1: 100 in a high-speed mixer at a rotation speed of 1,000 rpm for 20 minutes to obtain a third mixture. The above mixture was subjected to a heat treatment in a muffle furnace at 300°C for 4 hours under a nitrogen atmosphere to obtain a sodium-ion cathode material S4. The sodium-ion cathode material S4 was Na_{1.03}Ni_{0.33}Fe_{0.33}Mn_{0.33}Ti_{0.01}O₂ coated with Na₂Ti₆O₁₃.

### Example 5

The sodium-ion cathode material was prepared based on the method in Example 1. Specifically:
(1) Same as step (1) in Example 1, a coating layer C5 was prepared.
(2) Same as step (2) in Example 1, a matrix B5 was prepared.
(3) The coating layer C5 and the matrix B5 were mixed according to a weight ratio of 1: 100 in a high-speed mixer at a rotation speed of 1,000 rpm for 20 minutes to obtain a third mixture. The third mixture was subjected to a heat treatment in a muffle furnace at 300°C for 4 hours under an oxygen atmosphere to obtain a sodium-ion cathode material S5. The sodium-ion cathode material S5 was Na_{1.03}Ni_{0.33}Fe_{0.33}Mn_{0.33}Ti_{0.01}O₂ coated with Na₂Ti_{5.9}Fe_{0.1}O₁₃.

### Example 6

The sodium-ion cathode material was prepared based on the method in Example 1. Specifically:
(1) Same as step (1) in Example 3, a coating layer C6 was prepared. The coating layer C6 had a chemical composition of Na₂Ti₆O₁₃ and an average particle size D₅₀ of 100 nm.
(2) Same as step (2) in Example 2, a matrix B6 was prepared. The matrix B6 had a chemical composition of Na_{1.03}Ni_{1/3}Fe_{1/3}Mn_{1/3}O₂.
(3) Same as step (3) in Example 1, the coating layer C6 and the matrix B6, after being mixed, were subjected to a heat treatment, to prepared a sodium-ion cathode material S6. The sodium-ion cathode material S6 was Na_{1.03}Ni_{1/3}Fe_{1/3}Mn_{1/3}O₂ coated with Na₂Ti₆O₁₃.

### Example 7

The sodium-ion cathode material was prepared based on the method in Example 1. Specifically:
(1) Al₂O₃ was used to replace Fe₂O₃. A coating layer C7 was prepared. The coating layer had a chemical composition of Na₂Ti_{5.9}Al_{0.1}O₁₃ and an average particle size D₅₀ of 100 nm.
(2) Same as step (2) in Example 1, a matrix B7 was prepared.
(3) Same as step (3) in Example 1, the coating layer C7 and the matrix B7, after being mixed, were subjected to a heat treatment, to prepare a sodium-ion cathode material S7. The sodium-ion cathode material S7 was Na_{1.03}Ni_{0.33}Fe_{0.33}Mn_{0.33}Ti_{0.01}O₂ coated with Na₂Ti_{5.9}Al_{0.1}O₁₃.

### Example 8

The sodium-ion cathode material was prepared based on the method in Example 1. Specifically:
(1) Na₂CO₃, TiO₂, MgO, and water were mixed to obtain a slurry having a solid content of 50 wt%. The feeding amount of Na₂CO₃, TiO₂, and MgO satisfied: n(Na): n(Ti): n(Mg)=2.2: 5.9: 0.1. The obtained slurry was treated in a spray dryer to obtain dry powder with a drying temperature of 110°C, and drying duration was 0.5 h. The powder was sintered at 800°C for 6 hours under a nitrogen atmosphere to obtain a first sintered material. The first sintered material was mixed with pure water (a weight ratio of 100: 100) and then subjected to sanding in a sand mill for 4 hours to obtain a slurry having an average particle size D₅₀ of 50 nm. The slurry was dried in a vacuum oven at 80°C for 2 hours to obtain powder. The powder was crushed by a jet mill to obtain a coating layer C8. The coating layer C8 had a chemical composition of Na_{2.2}Ti_{5.9}Mg_{0.1}O₁₃ and an average particle size D₅₀ of 100 nm.
(2) Same as step (2) in Example 1, a matrix B8 was prepared.
(3) Differing from step (3) in Example 1, a weight ratio of the coating layer C8 to the matrix B8 was 2: 100. A sodium-ion cathode material S8 was prepared. The sodium-ion cathode material S8 was Na_{1.03}Ni_{0.33}Fe_{0.33}Mn_{0.33}Ti_{0.01}O₂ coated with Na₂Ti_{5.9}Fe_{0.1}O₁₃.

### Example 9

The sodium-ion cathode material was prepared based on the method in Example 1. Specifically:
(1) Step (1) was the same as step (1) in Example 1.
(2) Step (2) was the same as step (2) in Example 1.
(3) Differing from step (3) in Example 1, a weight ratio of the coating layer Cl to the matrix Bl was 0.02: 100. A sodium-ion cathode material S9 was prepared. The sodium-ion cathode material S9 was Na_{1.03}Ni_{0.33}Fe_{0.33}Mn_{0.33}Ti_{0.01}O₂ coated with Na₂Ti_{5.9}Fe_{0.1}O₁₃.

### Example 10

The sodium-ion cathode material was prepared based on the method in Example 1. Specifically:
(1) Step (1) was the same as step (1) in Example 1.
(2) Step (2) was the same as step (2) in Example 1.
(3) Differing from step (3) in Example 1, a weight ratio of the coating layer Cl to the matrix Bl was 6: 100. A sodium-ion cathode material S10 was prepared. The sodium-ion cathode material S10 was Na_{1.03}Ni_{0.33}Fe_{0.33}Mn_{0.33}Ti_{0.01}O₂ coated with Na₂Ti_{5.9}Fe_{0.1}O₁₃.

### Comparative Example 1

The feeding amount of Na₂CO₃, Ni_{0.33}Fe_{0.33}Mn_{0.33}(OH)₂, and TiO₂ satisfied: n(Na): [n(Ni)+n(Mn)+n(M)]: n(Ti)=1.03: 0.99: 0.01. Na₂CO₃, Ni_{0.33}Fe_{0.33}Mn_{0.33}(OH)₂, and TiO₂ were subjected to dry ball milling and mixing in a mixing tank at a rotation speed of 850 rpm for 4 hours. The obtained mixture was sintered in a muffle furnace at 950°C for 8 hours to obtain a cathode material D1. D1 had a chemical composition of Na_{1.03}Ni_{0.33}Fe_{0.33}Mn_{0.33}Ti_{0.01}O₂.

### Comparative Example 2

The sodium-ion cathode material was prepared based on the method in Example 1. Comparative Example 3 differed from Example 1 in that: in step (1), the dried powder was sintered under an oxygen atmosphere to obtain a coating layer DC2. The coating layer DC2 had a chemical composition of Na_{1.8}Ti_{5.9}Fe_{0.1}O_{12.9} and an average particle size of 100 nm.

Step (2) was the same as step (2) in Example 1.

Step (3) was the same as step (3) in Example 1. A sodium-ion cathode material DS2 was prepared.

### Comparative Example 3

The sodium-ion cathode material was prepared based on the method in Example 1. Comparative Example 3 differed from Example 1 in that: in step (1), the feeding amount of Na₂CO₃, TiO₂, and Fe₂O₃ satisfied n(Na): n(Ti): n(Fe)=2: 2.9: 0.1; and the dried powder was sintered under an oxygen atmosphere. A coating layer DC3 was prepared. The coating layer DC3 had a chemical composition of Na₂Ti_{2.9}Fe_{0.1}O₇ and an average particle size of 100 nm.

Step (2) was the same as step (2) in Example 1.

Step (3) was the same as step (3) in Example 1. A sodium-ion cathode material DS3 was prepared.

**[Table 1]**

| | | Example 1 | Example 2 | Example 3 |
|---|---|---|---|---|
| Matrix | Composition | Na_{1.03}Ni_{0.33}Fe_{0.33}Mn_{0.33}Ti_{0.01}O₂ | Na_{1.03}Ni_{1/3}Fe_{1/3}Mn_{1/3}O₂ | Na_{1.03}Ni_{0.33}Fe_{0.33}Mn_{0.33}Ti_{0.01}O₂ |
| | Residual alkali | 1.8 wt% | 1.8 wt% | 1.8 wt% |
| | Ti | 0.02 mol%/µm | a | 0.02mol%/µm |
| | Particle size | 10 µm | 10 µm | 10 µm |
| Coating layer | Composition | Na₂Ti_{5.9}Fe_{0.1}O₁₃ | Na₂Ti_{5.9}Fe_{0.1}O₁₃ | Na₂Ti₆O₁₃ |
| | Particle size | 100 nm | 100 nm | 100 nm |
| Cathode material | C: B | 1: 100 | 1: 100 | 1: 100 |
| | Thickness of coating layer | 50 nm | 50 nm | 50 nm |

| | | | | |
|---|---|---|---|---|
| ^{a} means that the matrix is not doped with Ti; and ^{b} means that the matrix is doped with Ti, but Ti is not distributed in a gradient. | | | | |

**[Table 1 (continued)]**

| | | Example 4 | Example 5 | Example 6 |
|---|---|---|---|---|
| Matrix | Composition | Na_{1.03}Ni_{0.33}Fe_{0.33}Mn_{0.33}Ti_{0.01}O₂ | Na_{1.03}Ni_{0.33}Fe_{0.33}Mn_{0.33}Ti_{0.01}O₂ | Na_{1.03}Ni_{1/3}Fe_{1/3}Mn_{1/3}O₂ |
| | Residual alkali | 2 wt% | 1.8 wt% | 1.8 wt% |
| | Ti | b | 0.02 mol%/µm | a |
| | Particle size | 10 µm | 10 µm | 10 µm |
| Coating layer | Composition | Na₂Ti_{5.9}Fe_{0.1}O₁₃ | Na₂Ti_{5.9}Fe_{0.1}O₁₃ | Na₂Ti₆O₁₃ |
| | Particle size | 100 nm | 100 nm | 100 nm |
| Cathode material | C: B | 1: 100 | 1: 100 | 1: 100 |
| | Thickness of coating layer | 50 nm | 50 nm | 50 nm |

| | | | | |
|---|---|---|---|---|
| ^{a} means that the matrix is not doped with Ti; and ^{b} means that the matrix is doped with Ti, but Ti is not distributed in a gradient. | | | | |

**[Table 1 (continued)]**

| | | Example 7 | Example 8 |
|---|---|---|---|
| Matrix | Composition | Na_{1.03}Ni_{0.33}Fe_{0.33}Mn_{0.33}Ti_{0.01}O₂ | Na_{1.03}Ni_{0.33}Fe_{0.33}Mn_{0.33}Ti_{0.01}O₂ |
| | Residual alkali | 1.8 wt% | 1.8 wt% |
| | Ti | 0.02 mol%/µm | 0.02mol%/µm |
| | Particle size | 10 µm | 10 µm |
| Coating layer | Composition | Na₂Ti_{5.9}Al_{0.1}O₁₃ | Na_{2.2}Ti_{5.9}Mg_{0.1}O₁₃ |
| | Particle size | 100 nm | 100 nm |
| Cathode material | C: B | 1: 100 | 2: 100 |
| | Thickness of coating layer | 50 nm | 100 nm |

| | | | |
|---|---|---|---|
| ^{a} means that the matrix is not doped with Ti; and ^{b} means that the matrix is doped with Ti, but Ti is not distributed in a gradient. | | | |

**[Table 1 (continued)]**

| | | Example 9 | Example 10 |
|---|---|---|---|
| Matrix | Composition | Na_{1.03}Ni_{0.33}Fe_{0.33}Mn_{0.33}Ti_{0.01}O₂ | Na_{1.03}Ni_{0.33}Fe_{0.33}Mn_{0.33}Ti_{0.01}O₂ |
| | Residual alkali | 1.8 wt% | 1.8 wt% |
| | Ti | 0.02 mol%/µm | 0.02 mol%/µm |
| | Particle size | 10 µm | 10 µm |
| Coating layer | Composition | Na₂Ti_{5.9}Fe_{0.1}O₁₃ | Na₂Ti_{5.9}Fe_{0.1}O₁₃ |
| | Particle size | 100 nm | 100 nm |
| Cathode material | C: B | 0.02: 100 | 6: 100 |
| | Thickness of coating layer | 10 nm | 300 nm |

| | | | |
|---|---|---|---|
| ^{a} means that the matrix is not doped with Ti; and ^{b} means that the matrix is doped with Ti, but Ti is not distributed in a gradient. | | | |

**[Table 1 (continued)]**

| | | Comparative Example 1 | Comparative Example 2 | Comparative Example 3 |
|---|---|---|---|---|
| Matrix | Composition | Na_{1.03}Ni_{0.33}Fe_{0.33}Mn_{0.33}Ti_{0.01}O₂ | Na_{1.03}Ni_{0.33}Fe_{0.33}Mn_{0.33}Ti_{0.01}O₂ | Na_{1.03}Ni_{0.33}Fe_{0.33}Mn_{0.33}Ti_{0.01}O₂ |
| | Residual alkali | 2.5 wt% | 2.5 wt% | 1.9 wt% |
| | Ti | 0.02 mol%/µm | 0.02 mol%/µm | 0.02 mol%/µm |
| | Particle size | 10 µm | 10 µm | 10 µm |
| Coating layer | Composition | / | Na₂Ti_{5.9}Fe_{0.1}O₁₃ | Na₂Ti₃O₇ |
| | Particle size | / | 100 nm | 100 nm |
| Cathode material | C: B | / | 1: 100 | 1: 100 |
| | Thickness of coating layer | / | 50 nm | 50 nm |

| | | | | |
|---|---|---|---|---|
| ^{a} means that the matrix is not doped with Ti; and ^{b} means that the matrix is doped with Ti, but Ti is not distributed in a gradient. | | | | |

The particle size, ionic conductivity, electronic conductivity, and volume impedance of the sodium-ion cathode materials prepared in the examples and comparative examples were tested, and the results are shown in Table 2.

**[Table 2]**

| | Particle size µm | Ionic conductivity S/cm | Electronic conductivity |
|---|---|---|---|
| Example 1 | 10 | 9.2×10⁻⁴ | 8.3×10⁻⁶ |
| Example 2 | 10 | 5.4×10⁻⁴ | 8.0×10⁻⁶ |
| Example 3 | 10 | 7.4×10⁻⁴ | 7.4×10⁻⁶ |
| Example 4 | 10 | 5.8×10⁻⁴ | 6.5×10⁻⁶ |
| Example 5 | 10 | 8.0×10⁻⁴ | 7.2×10⁻⁶ |
| Example 6 | 10 | 3.5×10⁻⁴ | 5.8×10⁻⁶ |
| Example 7 | 10 | 8.1×10⁻⁴ | 8.2×10⁻⁶ |
| Example 8 | 10 | 7.0×10⁻⁴ | 7.0×10⁻⁶ |
| Example 9 | 10 | 6.5×10⁻⁴ | 2.3×10⁻⁵ |
| Example 10 | 10 | 4.5×10⁻⁴ | 5.5×10⁻⁶ |
| Comparative Example 1 | 10 | 5.1×10⁻⁶ | 2.1×10⁻⁸ |
| Comparative Example 2 | 10 | 5.0×10⁻⁵ | 9.8×10⁻⁸ |
| Comparative Example 3 | 10 | 3.2×10⁻⁶ | 1.5×10⁻⁸ |

### Test Example

The cathode materials prepared in the examples and comparative examples were subjected to an initial charge-discharge performance test and a cycle performance test.

A button battery was prepared according to the following steps:

95g of cathode material, 2.5g of acetylene black, and 2.5g of polyvinylidene fluoride (PVDF) were mixed, coated on an aluminum foil and dried, and punched with a pressure of 100 MPa to obtain a positive electrode pole piece having a diameter of 12 mm and a thickness of 120 µm. Then, the positive electrode pole piece was placed in a vacuum drying oven and dried at 120°C for 12 hours;

A Na metal plate having a diameter of 17 mm and a thickness of 1 mm was used as a negative electrode. A polyethylene porous film having a thickness of 25 µm was used as a separator. A mixture having equal amounts of 1 mol/L NaPF₆, ethylene carbonate (EC), and diethyl carbonate (DEC) was used as an electrolyte. The positive electrode pole piece, the separator, the negative electrode plate, and the electrolyte were assembled into a button battery of 2025 type in an Ar gas glove box having a water content and an oxygen content of less than 5 ppm.

### Conditions of the tests:

The assembled button battery of 2025 type was left to stand for 12 hours. Parameters of the first charge/discharge capacity were measured in a button test cabinet at a temperature of 25°C and 0.1C@2.0-4.0V. Then, the charging and discharging were carried out sequentially at a rate of 0.1C and a rate of 1C to test parameters of the rate performance. The cycle performance was tested at a rate of 1C for 80 cycles. Subsequent to charging and discharging 2 times at 0.1C, the button battery was recharged to 4.2V. The battery was disassembled, and the positive electrode pole piece was taken out and placed in a differential thermal-thermogravimetric tester for DSC test. The results were shown in Table 3.

**[Table 3]**

| | 0.1 C discharge (mAh/g) | 1 C discharge (mAh/g) | Cycle retention rate after 80 cycles | DSC peak temperature (°C) |
|---|---|---|---|---|
| Example 1 | 152 | 145 | 93% | 295 |
| Example 2 | 146 | 134 | 89% | 294 |
| Example 3 | 149 | 140 | 92% | 296 |
| Example 4 | 145 | 132 | 90% | 290 |
| Example 5 | 148 | 142 | 91% | 294 |
| Example 6 | 141 | 128 | 89% | 281 |
| Example 7 | 148 | 143 | 93% | 295 |
| Example 8 | 146 | 140 | 94% | 307 |
| Example 9 | 147 | 140 | 91% | 292 |
| Example 10 | 132 | 125 | 93% | 300 |
| Comparative Example 1 | 132 | 115 | 85% | 270 |
| Comparative Example 2 | 140 | 120 | 87% | 280 |
| Comparative Example 3 | 135 | 110 | 87% | 272 |

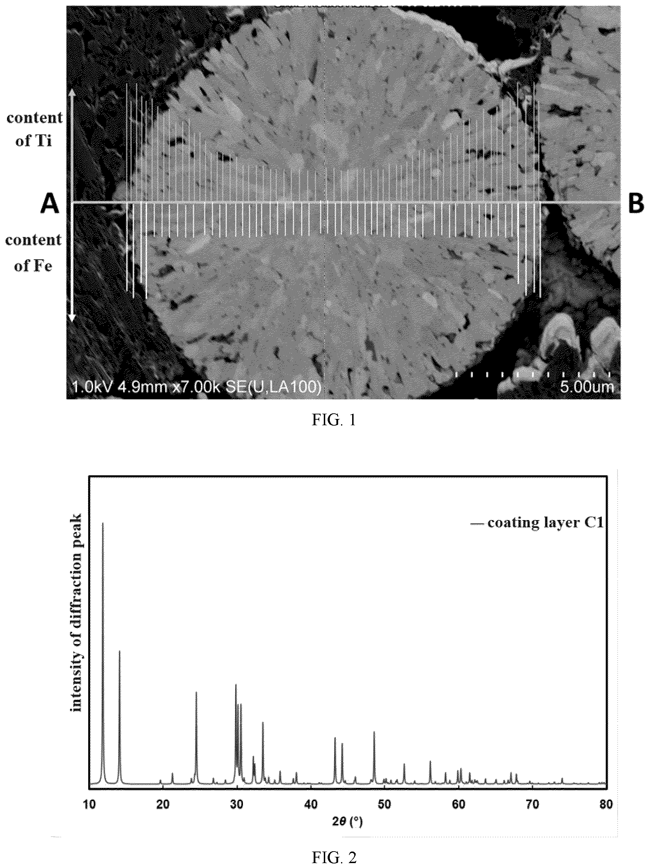

FIG. 1 is a cross-sectional EDS line scan image of a sodium-ion cathode material S1 prepared in Example 1. FIG. 1 reveals that, element Ti is distributed in a gradient in the matrix of the cathode material, and the coating layer is doped with Fe element.

FIG. 2 is an XRD diffraction pattern of a sample of a coating layer C1 prepared in Example 1. FIG. 2 reveals that the coating layer C1 is a pure phase of a Na₂Ti₆O₁₃ structure.

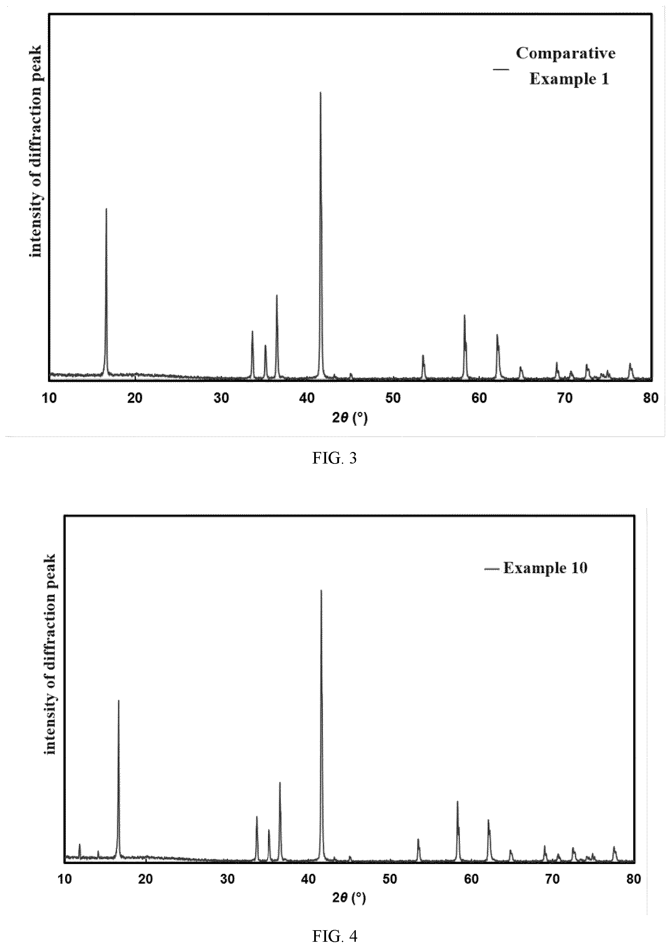

FIG. 3 is an XRD diffraction pattern of a cathode material prepared in Comparative Example 1. FIG. 3 reveals that the cathode material is a pure phase of a NaFeO₂ structure.

FIG. 4 is an XRD diffraction pattern of a cathode material prepared in Example 10. FIG. 4 reveals that, in addition to a main phase of the NaFeO₂ structure, there also exists a diffraction peak of a Na₂Ti₆O₁₃ structure in the cathode material, which indicates that there is a coating layer of the Na₂Ti₆O₁₃ structure on the surface of the cathode material.

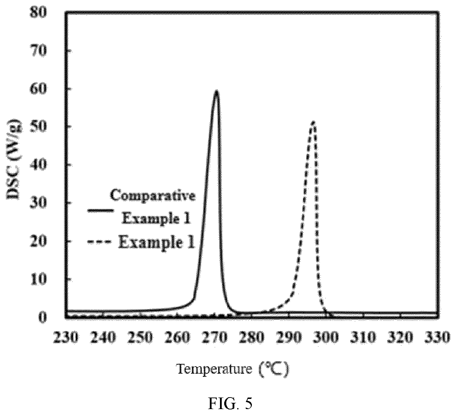

FIG. 5 is a DSC spectrum of a positive electrode pole piece prepared by the sodium-ion cathode materials in Example 1 and Comparative Example 1 at a charging state of 4.2 V It can be seen from FIG. 2 that the thermal stability of the positive electrode pole piece prepared by the sodium-ion cathode material in Example 1 having a nano-coating layer on the surface is significantly better than that of the positive electrode pole piece prepared by the sodium-ion cathode material in Comparative Example 1 without a coating layer. It indicates that the safety performance of the sodium-ion cathode material according to Example 1 is higher than that of the sodium-ion cathode material according to Comparative Example 1.

As can be seen from the results in Table 3, compared with Comparative Example 1 to Comparative Example 3, the sodium-ion batteries including the positive electrode pole pieces prepared by the sodium-ion cathode materials in Example 1 to Example 10 have a higher charge/discharge capacity and cycle performance, and the positive electrode pole pieces have a higher thermal runaway temperature, indicating that thermal runaway of these cathode materials can only occur when the ambient temperature is higher. Therefore, the batteries can have the meaningful battery safety.

Further, in the sodium-ion cathode material of Example 1, the coating layer contains doping elements, and element Ti in the matrix is distributed in a gradient. When the sodium-ion cathode material is used in a sodium-ion battery, the charge and discharge capacity, cycle performance, and exothermic temperature are further improved.

The preferred embodiments of the present disclosure are described in detail above. However, the present disclosure is not limited thereto. Within the scope of technical conception of the present disclosure, a variety of simple variations may be made to the technical solutions of the present disclosure, including the combination of various technical features in any other suitable manner. These simple variations and combinations shall be regarded as the contents disclosed by the present disclosure, and all of them fall within the scope of protection of the present disclosure.

## Claims

1. A sodium-ion cathode material, comprising:
a matrix; and
a coating layer coated on the matrix;
wherein the matrix has a composition represented by formula I:
Na_{1-*x*}[Ni*_{y}*Mn*_{z}*M*ᵤ*]Ti*ᵥ*O₂ formula I,
where:
-0.4<x<0.4, 0.2<y<0.6, 0.1≤*z*≤0.5, 0.1<u<0.5, 0≤*v*≤0.02, *y*+*z*+*u*+*v*=1; and M is selected from at least one of Fe, Mg, Al, Cu, Zn, Zr, Nb, Co, Y, V, Sc, Cr, W, La, Mo, Os, Pr, Re, Ru, Sr, Sm, and Ta; and
wherein the coating layer has a composition represented by formula II:
Na_{2-β}Ti_{6-*α*}M'*_{α}*O₁₃ formula II,
where:
0≤*α*≤0.6, -2≤*β*<1; and M' is selected from at least one of Li, Mg, Fe, Al, Ga, In, Ge, Y, Sc, and Zr.

2. The sodium-ion cathode material according to claim 1, wherein:
in formula I, -0.2<x<0.4, 0.2<y<0.5, 0.2<z<0.5, 0.2<u<0.5, 0.01<v<0.02, *y*+*z*+*u*+*v*=1; and M is selected from at least one of Fe, Cu, Nb, Co, V, and Cr; and
preferably, in formula II, 0<a<0.5, -2≤*β*<1; and M' is selected from at least one of Mg, Fe, Al, Y and Zr.

3. The sodium-ion cathode material according to claim 1 or 2, wherein:
in a direction from a center of the matrix to a surface of the matrix, element Ti is distributed in a gradient, and preferably, in an increasing gradient; and
preferably, in the direction from the center of the matrix to the surface of the matrix, element Ti is increased with a rate ranging from 0.001 mol%/µm to 0.3 mol%/µm, and preferably, from 0.001 mol%/µm to 0.2 mol%/µm.

4. The sodium-ion cathode material according to any one of claims 1 to 3, wherein:
a weight ratio of the matrix to the coating layer is 100: (0.01 to 5), and preferably, 100: (0.05 to 3);
preferably, the coating layer has a thickness ranging from 10 nm to 200 nm, and preferably, from 10 nm to 100 nm; and
preferably, the cathode material has an average particle size D₅₀ ranging from 2 µm to 30 µm, and preferably, from 4 µm to 12 µm.

5. The sodium-ion cathode material according to any one of claims 1 to 4, wherein:
the cathode material has an ionic conductivity ranging from 10⁻⁴ S/cm to 10⁻³ S/cm, and preferably, from 5×10⁻⁴ S/cm to 10⁻³ S/cm; and
preferably, the cathode material has an electronic conductivity ranging from 10⁻⁷ S/cm to 10⁻⁶ S/cm, and preferably, from 5×10⁻⁷ S/cm to 10⁻⁶ S/cm.

6. A preparation method of a sodium-ion cathode material, comprising:
(1) performing a first mixing on a first sodium source, an optional M' source, a titanium source with a solvent to obtain a first slurry; sequentially performing a first drying and a first sintering on the first slurry to obtain a first sintered product; and sequentially crushing and drying the first sintered product to obtain a coating layer;
wherein the coating layer has a composition represented by formula II:
Na_{2-*β*}Ti_{6-*α*}M'*_{α}*O₁₃ formula II,
where:
0≤*α*≤0.6, -2≤*β*<1; and M' is selected from at least one of Li, Mg, Fe, Al, Ga, In, Ge, Y, Sc, and Zr;
(2) performing a second mixing on a second sodium source, a nickel source, a manganese source, an M source, and an optional titanium source, and sequentially performing a second drying and a second sintering on the obtained second mixture to obtain a matrix;
wherein the matrix has a composition represented by formula I:
Na_{1-*x*}[Ni*_{y}*Mn*_{z}*M*ᵤ*]Ti*ᵥ*O₂ formula I,
where:
-0.4<x<0.4, 0.2<y<0.6, 0.1≤*z*≤0.5, 0.1<u<0.5, 0≤*v*≤0.02, *y*+*z*+*u*+*v*=1; and M is selected from at least one of Fe, Mg, Al, Cu, Zn, Zr, Nb, Co, Y, V, Sc, Cr, W, La, Mo, Os, Pr, Re, Ru, Sr, Sm, and Ta; and
(3) performing a third mixing on the coating layer and the matrix, and performing a heat treatment on the obtained third mixture to obtain the sodium-ion cathode material;
wherein the first sintering is performed in a non-oxidizing gas.

7. The preparation method according to claim 6, wherein:
in step (1), the first slurry has a solid content ranging from 30 wt% to 55 wt%;
preferably, conditions of the first sintering comprise: a temperature ranging from 500°C to 1,200°C, and preferably, from 700°C to 850°C; and a duration ranging from 4 hours to 10 hours, and preferably, from 6 hours to 8 hours;
preferably, said crushing comprises: crushing the first sintered product and the solvent at a weight ratio of 100: (50 to 100);
preferably, conditions of said drying comprise: a temperature ranging from 60°C to 120°C and a duration ranging from 0.5 hours to 5 hours; and
preferably, the coating layer has an average particle size D₅₀ ranging from 10 nm to 200 nm, and preferably, from 10 nm to 100 nm.

8. The preparation method according to claim 6 or 7, wherein:
the second mixing comprises: performing coprecipitation on the nickel source, the manganese source, and the M source to obtain a precursor Ni*_{y}*Mn*_{z}*M*ᵤ*(OH)₂, performing a mixing I on the precursor Ni*_{y}*Mn*_{z}*M*ᵤ*(OH)₂ with the titanium source, and then performing a mixing II on a mixture of the precursor Ni*_{y}*Mn*_{z}*M*ᵤ*(OH)₂ and the titanium source with the second sodium source to obtain a second mixture;
preferably, conditions of the second sintering comprise: a temperature ranging from 600°C to 1,200°C, and preferably, from 750°C to 1,200°C; and a duration ranging from 6 hours to 10 hours, and preferably, from 8 hours to 10 hours; and
preferably, the content of the residual alkali on a surface of the matrix is ≤2wt%, and preferably, from 0.1 wt% to 1 wt%.

9. The preparation method according to any one of claims 6 to 8, wherein:
the heat treatment is performed in the non-oxidizing gas;
preferably, conditions of the heat treatment comprise: a temperature ranging from 200°C to 600°C, and preferably, from 400°C to 600°C; and a duration ranging from 4 hours to 8 hours, and preferably, from 6 hours to 8 hours;
preferably, the third mixing comprises: directly performing the third mixing on the coating layer with the matrix; or mixing the coating layer with the solvent and performing ball milling on the mixture to obtain a second slurry, and performing the third mixing on the second slurry with the matrix;
more preferably, the second slurry has a solid content ranging from 30 wt% to 55 wt%; and
preferably, a weight ratio of the coating layer to the matrix ranges from (0.01 to 5): 100, and preferably, from (0.05 to 3): 100.

10. A sodium-ion cathode material prepared by the preparation method according to any one of claims 6 to 9.

11. Use of the sodium-ion cathode material according to any one of claims 1 to 5 and claim 10 in a sodium-ion battery.

12. A sodium-ion battery, comprising a positive electrode pole piece prepared by the sodium-ion cathode material according to any one of claims 1 to 5 and claim 10;
preferably, subsequent to 80 cycles at 25°C, the sodium-ion battery has a cycle retention rate of ≥75%, and preferably, from 90% to 100%; and
preferably, in a 4.2V charging state, the positive electrode pole piece has a Differential Scanning Calorimetry (DSC) exothermic temperature of >280°C, and preferably, from 290°C to 350°C.

13. A sodium-ion battery pack, comprising the sodium-ion battery according to claim 12.

14. A device, comprising the sodium-ion battery pack according to claim 13.
